# EUROPEAN PATENT SPECIFICATION

(11) **EP 4 212 970 B1**
(45) Date of publication and mention of the grant of the patent: **05.08.2026**
(21) Application number: 22151867.3
(22) Date of filing: 17.01.2022
(51) Int. Cl.: G05B 17/02, C25B 1/04, C25B 15/00

(54) **METHOD FOR CONTROLLING OPERATION OF AN ELECTROLYZER PLANT**
VERFAHREN ZUR STEUERUNG DES BETRIEBS EINER ELEKTROLYSEURANLAGE
PROCÉDÉ DE COMMANDE DU FONCTIONNEMENT D'UNE INSTALLATION D'ÉLECTROLYSEUR

(43) Date of publication of application: 19.07.2023
(73) Proprietor: ABB SCHWEIZ AG, 5400 Baden (CH)
(72) Inventor: GUTERMUTH, Georg, 69115 Heidelberg (DE); BISKOPING, Matthias, 69493 Hirschberg (DE); LENDERS, Felix, 64293 Darmstadt (DE)
(74) Representative: Maiwald GmbH

(56) References cited:
- EP-A1- 3 690 792
- FLAMM BENJAMIN ET AL: "Electrolyzer modeling and real-time control for optimized production of hydrogen gas", APPLIED ENERGY, ELSEVIER SCIENCE PUBLISHERS, GB, vol. 281, 22 October 2020 (2020-10-22), XP086353955, ISSN: 0306-2619, [retrieved on 20201022], DOI: 10.1016/J.APENERGY.2020.116031

## Description

### FIELD OF THE INVENTION

The invention pertains to a method for controlling operation of an electrolyzer plant, a system, a computer program product, and a computer-readable medium.

### BACKGROUND

Determining an optimal operating point of an electrolyzer plant is usually a large optimization problem.

An electrolyzer plant can be seen as a coupling component in complex energy systems that couples different networks, i.e., electricity, heat, hydrogen, and oxygen networks. There are, accordingly, various aspects that may be taken into account in the optimization, both, on the electricity source side and the hydrogen, oxygen, and heat output side of the electrolyzer plant. For example, the available grid energy may be limited or there may be upper limits of hydrogen, heat, or oxygen that can be fed into the respective networks.

Moreover, further aspects may also be taken into account in the optimization, e.g., available storage for energy, hydrogen, oxygen, and heat, and their respective efficiency.

Further aspects that may also be taken into account in the optimization are characteristics of the electrolyzer modules, operating conditions, or wear of equipment, among others.

Optionally, in addition to the above-described technical aspects, there may also be aspects that concern pricing, contractual obligations, or the like, that can be taken into account in the optimization.

At present, electrolyzer plants are often not operated at ideal operating points. Although modelling is used to determine operating points for the electrolyzer plant and/or its components, the results of the modelling are often inaccurate. Inaccurate modelling may lead to non-optimal operation of electrolyzer modules, e.g., in terms of efficiency and/or wear, and may also lead to the actual electricity demand and/or output of hydrogen, oxygen, and heat, not being as predicted, which may cause technical issues and, in addition, in some cases also contractual and/or cost issues. For example, output of a required amount of hydrogen, oxygen, and/or heat may not be possible at all or without operating at non-ideal operating conditions (e.g., in terms of wear and/or efficiency) or without resorting to buying electricity at higher-than-expected costs.

Using known methods, high accuracy would require using more complex models and, at the same time, frequent recalculations of the operating point so as to account for changing conditions. Accordingly, in many cases, accuracy needs to be sacrificed for the benefit of robustness and solvability within limits in terms of available time and computing resources. Academic publication "Electrolyzer modelling and real-time control for optimized production of hydrogen gas" by Flamm B. et al, refers to a method to operate an electrolyzer in a near-optimal manner by combining system identification and nonlinear model predictive control (MPC) techniques to minimize the cost of producing hydrogen gas for a hydrogen refueling station.

It is an object of the present invention to provide a method for controlling operation of an electrolyzer plant that alleviates at least some of the above disadvantages.

### SUMMARY

The object is achieved by the present invention. The invention provides a method, system, computer program product, and computer-readable medium according to the independent claims. Preferred embodiments are laid down in the dependent claims.

The invention provides a computer-implemented method for controlling operation of an electrolyzer plant. The method comprises (a) determining, by means of a first model, first operating points of the electrolyzer plant for a predetermined first period of time, (b) simulating, by means of a second model, operation of the electrolyzer plant for the first operating points for a predetermined second period of time that is shorter than and comprised in the first period of time, the second model being a model having higher prediction accuracy for the operation of the electrolyzer plant than the first model, and (c) determining whether the simulated operation meets a predetermined requirement. The method comprises, (d) upon determining that the simulated operation does not meet the predetermined requirement, adjusting one or more parameters and/or one or more boundary conditions of the first model, and (e) upon determining that the simulated operation meets the predetermined requirement, setting the first operating points as target operating points for the predetermined second period of time, wherein setting the first operating points as target operating points will lead to the plant being controlled in such a manner that it will operate at the target operating points.

In the present disclosure, an operating point is value of the power at which the electrolyzer plant is operated at a given point in time. The operating points are also referred to as setpoints or operating setpoints in the present disclosure.

The first operating points may comprise all the operating points for the second period of times. Operating points may be different at different times of the first period of time. This may be described as a function of the operating points as a function of time.

As mentioned above, the second period of time is comprised in the first period of time. The first period of time and the second period of time may, for example, begin at the same time and extend until different points in time. As an example, the first period of time may be a plurality of days, in particular, one or more weeks, in particular one or more months, and the second period of time may be a plurality of hours, in particular a day. The first period may, thus, for example, be split up into consecutive second periods of equal or different lengths.

The first model and the second model, respectively, may include a representation of interdependencies between input power and hydrogen and/or oxygen and/or heat output, among others.

The first model may be seen as a long-term planning model.

The first model, for example, may be a model that determines operating points based on first parameters that may include external parameters, for example, predicted availability of grid energy over the first period of time, predicted hydrogen demand, or the like. The first parameters may also include parameters representing general electrolyzer plant characteristics, for example, number of electrolyzer modules and/or nominal overall hydrogen production efficiency of the plant.

The first model may, for example, not take into account parameters characterizing the electrolyzer plant on an individual module basis. Thus, the number of parameters may be kept low, and the modelling may not be excessively computationally expensive. For example, the model may be a linear model. Therefore, the modelling may be performed even for the longer first period at reasonable computational resource consumption. However, accuracy of this model may be limited, for example, due to not taking into account efficiency characteristics of individual modules.

Determining the first operating points by means of the first model may comprise performing an optimization of the operating points on the basis of (the) first parameters and optionally the one or more first boundary conditions.

The first model may predict a power consumption and/or hydrogen production curve for the future. The first model may allow for solving an optimization problem to determine optimal operating points.

Optionally, the first model may be configured as a conservative model in terms of a selected parameter. For example, the first model may be configured to underestimate hydrogen production, e.g., to ensure that a required minimum hydrogen amount will always be produced even if the model is inaccurate. Alternatively or in addition, the first model may be configured to underestimate available storage volume for hydrogen, e.g., to ensure that some storage volume remains available even if the model is inaccurate.

The second model may, for example, be a model that determines operating points based on second parameters that may include plant internal parameters, i.e., parameters characterizing the electrolyzer plant, in particular including parameters characterizing the electrolyzer plant on an individual module basis. Optionally, it may not take into account all of the plant-external parameters, for example the parameters taken into account by the first model.

The second model may, for example, be a plant model that had already been built previously, e.g., upon setting up the plant for operation, e.g., for optimization of the plant setup and/or controlling and/or optimizing plant operation.

The second model may be more accurate in predicting the effects of the operating points determined by the first model. For example, it may use more parameters and/or boundary conditions and/or interdependencies and/or more appropriate equations for representing operation of the plant.

The electrolyzer plant may comprise a plurality of electrolyzer modules and each electrolyzer module may be characterized by a plurality of characteristics that may be represented by the second parameters. Moreover, the second parameters may also include parameters representative of the current state of one or more of the modules, e.g., temperature or the like. The second model may, thus, take into account a larger number of parameters than the first model. Accordingly, it may produce more accurate results. However, the determining by means of the second model may also be more computationally expensive, e.g., due to its complexity, such that a calculation for a shorter period of time than the first model helps avoiding overall excessive computing resource consumption. Furthermore, the second parameters may include more dynamic parameters than the first parameters. The shorter period of time also allows for higher accuracy.

The second model may be seen as a short-term model for simulation of the first model operating points.

The simulating operation of the electrolyzer plant by means of the second model may comprise an optimization. As an example, in case the second model is fully determined by the output from the first model, no optimization may be required. However, particularly in case the second model is not fully determined by the output from the first model the simulating may comprise optimization. In other words, for example in case free parameters exist in the second model, the simulating may comprise an optimization. The second model, in such a case, has some degrees of freedom. The present disclosure, unless specified otherwise, refers to a simulation to entail simulations with and without optimization.

The second model may take the first operating points as an input and, based on (the) second parameters simulate operation of the electrolyzer plant at the first operating points for the second period of time. The method comprises determining whether the simulated operation meets at least one predetermined requirement. The requirement may be that one or more conditions are met. For example, the conditions to be met may comprise that one or more boundary conditions are not violated, for example, that values of parameters remain above and/or below a predetermined threshold, in particular, remain within a predetermined interval. The boundary conditions may, for example, be safety-related requirements, for example, an allowed temperature range. Alternatively or in addition, the conditions to be met may comprise that a difference between the modeled operation of the electrolyzer plant as obtained by the first model and as obtained by the second model remains below a predetermined threshold.

The method comprises, upon determining that the simulated operation does not meet the predetermined requirement, adjusting one or more parameters and/or one or more boundary conditions of the first model, and upon determining that the simulated operation meets the predetermined requirement, setting the first operating points as target operating points for the predetermined second period of time. The method may, for example, comprise predicting an expected outcome for adjusted parameters and/or one or more adjusted boundary conditions to determine the adjustment.

"Upon determining" in the present disclosure is used synonymously with "in response to determining".

In other words, only if the operating points determined by the first model are found to be acceptable when applying the more accurate second model, these operating points will be used for operation of the electrolyzer plant during the second period of time. Otherwise, e.g., if based on the second model it is determined that the operating points obtained by the first model are not acceptable or, in other words, it is determined that corrected operating points are required at least for the predetermined second period of time, a recalculation of the operating points by means of the second model using different parameters and/or boundary conditions is triggered and, based thereon, the first operating points are corrected using results from the second model that describes plant operation more comprehensively.

Accordingly, results from the less resource intensive second model can be used in case it yielded accurate results and only when the results are not optimal, more computing resources will be required.

Thus, using the method of the present disclosure, the accuracy of determining operating points can be improved without significantly increasing the overall computing resource consumption. Thus, the method of the present disclosure solves at least the above-identified problem.

The determining by means of the first model may be less computationally expensive than the simulating by means of the second model. In particular, the first model may be a linear model and the second model may be a non-linear model and/or may take into account a larger number of parameters than the first model. As an example, the first model may assume a constant efficiency for different operating points. This will generally not correspond to reality, where efficiency depends on the operating point.

A model being computationally less expensive than another model may entail that determining operating points or simulating operation by means of the model requires fewer computing resources, particularly CPU and/or data transfer, and/or memory usage, than determining operating points or simulating operation by means of the other model.

For example, as mentioned above, determining the operating points by means of the first model and/or the second model may comprise solving an optimization problem. Solving optimization problem becomes more computationally expensive for non-linear models, for a larger number of parameters, for a longer time horizon being modelled, and/or for finer time discretization.

By using the computationally more expensive model only for refining the computationally less expensive model if required, improved operation can be ensured without exceedingly increasing the usage of computing resources.

In the present disclosure, the first model may determine operating points on the basis of a first data set, wherein the first data set comprises one or more plant-external parameters. The second model may simulate operation of the electrolyzer plant on the basis of a second data set, wherein the second data set comprises one or more plant-specific parameters not comprised in the first data set.

This allows for serving different main purposes with the two models. For example, the first model may serve the main purpose of, within the capabilities of the electrolyzer plant, adjusting operation to plant-external parameters that often cannot necessarily be influenced by plant operators. These parameters represent external limitations, which include technical limitations, e.g., as to the availability of power and the possible amount of hydrogen that may be output by the plant, e.g., fed into external networks. In addition, optionally, they may also include other types of limitations, e.g., contractual limitations. In addition to the technical limitations, the parameters may also optionally represent price predictions, e.g., for power and hydrogen. The second model may, for example, serve the main purpose of ensuring optimal operation of the electrolyzer plant in terms of plant-internal parameters. For example, the module-specific characteristics, e.g., efficiency curves and/or predicted module deterioration, and/or overall plant characteristics, e.g., overall efficiency curve and/or predicted overall deterioration, may be taken into account. Alternatively or in addition, operation-specific parameters, particularly safety-relevant parameters may be taken into account.

Examples as to aspects that may be taken into account by the second model are, for example on a module-basis, production rates, power consumption, temperature, pressure, ramping behavior, production distribution between several modules/stacks, degradation, mechanical stress, harmonics, reactive power, and/or hydrogen and oxygen mixing. These parameters may follow a non-linear relation.

High accuracy optimization may require high accuracy understanding of module efficiency and degradation. A model that accurately reflects this understanding is complex and optimizations based thereon may be computationally expensive. Thus, even if the first model takes into account parameters that allow for deriving efficiency and expected degradation, in order to keep the model simple, the model will not provide an in-depth representation and, accordingly, lack accuracy. For example, the information may be information obtained at time of installation using data from manufacturer data sheets or measurements. However, these may not be accurate for the actual electrolyzer modules, dependencies may not be fully taken into account, effects from interdependencies of parameters and effects from specific operating conditions may not be fully taken into account, and parameter changes over time may not be fully reflected.

Reference is also made to the above description in terms of the first parameters, e.g., plant-external parameters, which may be part of the first data set, and the second parameters e.g., plant-internal parameters, which may be part of the second data set.

The first data set and the second data set may partly overlap, i.e., they need not be mutually exclusive. For example, both data sets may comprise overall electrolyzer plant nominal characteristics, e.g., number of electrolyzer modules and/or operating efficiency.

An overlap may allow for a faster convergence of results from the first and second model.

In the method according to the present disclosure, determining whether the simulated operation meets the predetermined requirement may comprise determining, for each of one or more boundary conditions, whether the simulated operation causes a violation of the boundary condition and, if it is determined that there is no violation of any of the boundary conditions, determining that the simulated operation meets the predetermined requirement.

In other words, the predetermined requirement is only determined to be met when there is no violation of any of the boundary conditions. This is advantageous in that the operation of the electrolyzer plant can be reliably held within a safe and/or efficient operating range.

In particular, in case it is determined that the simulated operation causes a violation of one or more of the boundary conditions, the adjusting may comprise adjusting one more corresponding boundary conditions of the first model for at least the second period of time, and optionally issuing a warning.

Boundary conditions may comprise operating parameters of the electrolyzer plant, in particular of the electrolyzer modules, for example, a minimum and/or maximum admissible set point for each of the electrolyzer modules and/or admissible operating temperatures of each of the electrolyzer module. The boundary conditions may be selected to ensure safe operation and/or to reduce wear and/or to best utilize the efficiency curve that characterizes each electrolyzer module. The latter represents the efficiency as a function of electrolyzer set point, which, for example, may be rather low at low set points.

A "corresponding" boundary condition of the first model, according to the present disclosure, may be a boundary condition that is the same as the boundary condition in the second model, e.g., in case the boundary condition of the second model is directly applicable to the first model. This may be the case when parameters of the second model are also taken into account in the first model. The corresponding boundary condition of the first model may also be a boundary condition for a parameter of the first model that is related to a parameter in the second model to which the boundary condition of the second model applied. For example, if a parameter of the second model is not taken into account in the first model, then the boundary condition relating to the parameter of the second model may be translated to a corresponding boundary condition of a different parameter of the first model. This amounts to an indirect adjustment of the boundary condition of the first model.

For example, while the first model may not take into account operating temperature of an electrolyzer module, a boundary condition in the second model that pertains to the operating temperature may be translated to a corresponding boundary condition, for example a boundary condition on an overall rate of hydrogen production.

The use of the boundary conditions may ensure safe and reliable operations by placing restrictions on permissible parameter values for operation. They may also serve to improve accuracy depending on the parameters to which the boundary conditions apply.

In some cases, the method of the present disclosure may not be limited to identical boundary conditions for the first and second models but may instead apply corresponding boundary conditions. This allows for combining a large variety of first and second models, particularly without having restrictive requirements in terms of overlapping parameters and parameter compatibility of the two models.

The method of the present disclosure may further comprise determining a first operation of the electrolyzer plant, the operation being characterized by the first operating points determined, by means of the first model, for the predetermined second period of time and computing a difference between the first operation obtained by means of the first model and the simulated operation obtained by means of the second model. In particular, determining whether the simulated operation meets the predetermined requirement may comprise determining whether the difference meets a predetermined similarity requirement, e.g., remains within predetermined limits and/or below a predetermined threshold.

The operation of the plant may, for example, be characterized at least by input power and a hydrogen output and/or an efficiency of hydrogen production of the overall plant. Additional parameters characterizing the operation are conceivable.

In case it is determined that the difference does not meet the predetermined similarity requirement, the adjusting may comprise adjusting one or more parameters of the first model.

As an example, the difference may be a difference of an overall operating point at a given point in time or a difference between curves representing the overall operating point as a function of time. Adjusting the parameters as described further above may allow for the output of the first model to become more similar to that of the second model

The above allows for improved overall accuracy. For example, even if all boundary conditions mentioned above are met, further improvement of the accuracy of the first model may be achieved by reducing the difference or, in other words, increasing the similarity.

The method of the present disclosure may comprise, in response to determining that the simulated operation causes a violation of the boundary condition, temporarily overriding the first operating points for the second period of time with temporary operating points, for example obtained by means of the second model, such that operation for the temporary operating points does not cause a violation of the boundary condition, in particular, of any boundary condition. The determining that the simulation causes the violation may be part of determining whether the predetermined requirement is met.

During operation, scenarios may occur where operating the plant with the first operating points is highly undesirable, for example in terms of safety, deterioration, and/or efficiency. This is due to the first model not taking into account all the internal parameters of the electrolyzer plant, which may yield blind spots in terms of certain scenarios. As an example, when a violation of a boundary condition relating to a safety-critical parameter, e.g., operating temperature of an electrolyzer module, is determined based on the second model, operation with the first operating points may cause the electrolyzer plant to operate in an unsafe manner.

In particular, the overriding may be performed in response to determining that an expected time required for an adjustment of the first model and recalculation of the operating points by means of the first model exceeds a predetermined threshold and/or in response to determining that a safety-critical boundary condition is violated.

The temporarily overriding the first operating points and operating the electrolyzer plant with the temporary operating points, while potentially not being ideal in terms of the optimization goals underlying the first model, thus may ensure safe, reliable, and/or efficient operation of the electrolyzer plant.

The temporarily overriding may be performed at least until it is determined that the adjusting has resulted in a simulated operation that does not cause a violation of the boundary condition, in particular, that meets the predetermined requirement.

In particular, once it has been determined that the adjusting has resulted in a simulated operation that does not cause a violation of the boundary condition, in particular, that meets the predetermined requirement, and optionally that no other violation of a boundary condition occurs, the temporarily overriding may end.

Optionally, while overriding the first operating points, the temporary operating points may be determined such that boundary conditions of the first and/or the second model are not violated and that the temporary operating points remain as close as possible to the first operating points.

The method of the present disclosure may comprise repeating steps (a) to (d) at least until determining that the simulated operation meets the predetermined requirement.

That is, the method may iteratively adjust one or more parameters and/or one or more boundary conditions of the first model and, after the adjustment, recalculate operating points by means of the first model. This may be done at least until the predetermined requirement is met. The repeating may cease once the predetermined requirement is met. This is advantageous in terms of computing resources. Alternatively, the steps may also be repeated after the simulated operation meets the predetermined requirement, e.g., for monitoring and/or correction purposes. E.g., the steps may be repeated at predetermined times or time intervals within the second period of time. Thus, accuracy and reliability can be improved.

The method of the present disclosure may comprise performing steps (a) to (d), and in particular performing any of the method steps outlined above, for one or more additional periods of time as the second period of time, particularly, at predetermined times and/or predetermined time intervals for an upcoming period of time that is shorter than and comprised in the first period of time.

As an example, the first period of time may be a plurality of days and each second period of time may be a day or less. Steps (a) to (d) may then be performed at least once on each of the days, for example at predetermined times and/or at predetermined intervals, e.g., at 24-hour intervals.

The above allows for ensuring that changing accuracy of the first model over time after an initial check and potentially adjustment, i.e., after performing steps (a) to (d) once, is detected and corrected in a timely manner.

The method of the present disclosure may comprise storing adjustment data in a computer readable manner and/or performing, based on (the) adjustment data, particularly by means of a machine learning method, improvements to the first model, in particular improvements taking into account context information.

The adjustment data may, for example, comprise the one or more adjusted parameters and/or the one or more adjusted boundary conditions and/or adjusted operating points, i.e. operating points obtained determined based on the first model using adjusted parameters and/or the one or more adjusted boundary conditions, and/or adjustment steps performed to obtain the adjusted parameters and/or adjusted boundary conditions, and optionally comprising associated context data, e.g., reflecting operating conditions and/or environmental factors associated with the second period of time.

Improving the first model may comprise modifying parameters and/or boundaries of the first model for periods of time after the second period of time, in particular, even after first period of time, and in such a manner as to obtain more accurate results.

Associated context data may be context data associated with the one or more adjusted parameters and/or the one or more adjusted boundary conditions and/or adjusted operating points and/or adjustment steps performed to obtain the adjusted operating point.

Associated context data may comprise data allowing for a classification of time periods, e.g., day-classes, season-classes, weather classification, classes pertaining to shifts or productions schedules. Specific adjustments associated with a specific class may be used to determine modifications to the first model that allow for the model to make improved predictions by taking into account the classification of the time periods in question.

Labeling may be used to store context data and/or to define the association between context data and the remaining adjustment data.

Providing and/or using adjustment data as outlined above, the first model may be tuned on the basis of the adjustments to better reflect real operation of the electrolyzer plant, particularly under specific circumstances reflected by context data.

Thus, the accuracy of the first model can be improved, thereby reducing the need of future adjustment using the second model.

In the method of the present disclosure, simulating, by means of the second model, may comprise performing independent simulations at electrolyzer module level in parallel for a plurality of electrolyzer modules of the electrolyzer plant, and subsequently aggregating the results of the independent simulations taking into account interdependencies among the electrolyzer modules and optionally interdependencies between the electrolyzer modules and other pieces of equipment of the electrolyzer plant.

In other words, at least a partial parallelization of the calculations involved in the simulating may be performed. This improves overall performance, which as a result also means that a delay in adjusting and subsequent recalculation is reduced. As a result, the overall operation is more efficient and potentially safer. Furthermore, in case the above-described overriding is performed, the time during which overriding is performed may be reduced.

The invention also provides a system comprising a processing system configured to carry out any of the methods of the present disclosure. The processing system is also referred to as computing system in the present disclosure.

The system may further comprise a plurality of electrolyzer modules of an electrolyzer plant, the processing system configured to control operation of the electrolyzer modules to operate at the target operating points for the second period of time.

The system may be or comprise the electrolyzer plant.

The system may be configured to provide operation data and/or specification data of the electrolyzer modules as input to the first model and/or the second model.

Operation data may comprise current operation parameters and/or historical operation parameters. Specification data may comprise data representing characteristics of the electrolyzer modules, for example, characteristics provided by a manufacturer and/or characteristics derived therefrom and/or from operation data.

The electrolyzer modules may be configured to provide operation data and/or specification data directly as input for the first model and/or operation data and/or specification data may be retrieved from a data storage and/or operation data may be obtained via monitoring equipment.

The invention also provides a computer program product comprising instructions which, when the program is executed by a computer, cause the computer to carry out any of the methods of the present disclosure.

The invention also provides a computer-readable medium comprising instructions which, when executed by a computer, cause the computer to carry out any of the methods of the present disclosure.

The features and advantages outlined above in the context of the method similarly apply to the system, the computer program product, and the computer-readable medium described herein.

Further features, examples, and advantages will become apparent from the detailed description making reference to the accompanying drawings.

### BRIEF DESCRIPTION OF THE DRAWINGS

In the accompanying drawings,
- Figures 1a and 1b: illustrate schematic representations of an electrolyzer plant;
- Figure 2: is a flowchart illustrating a method according to the present disclosure;
- Figure 3: is a flowchart illustrating a method according to the present disclosure;
- Figures 4: illustrates an exemplary efficiency curve of a module or plant;
- Figure 5: illustrates an exemplary operation profile of a plant;
- Figure 6: illustrates exemplary hydrogen production curves;
- Figure 7: illustrates exemplary power demand curves;
- Figure 8: illustrates an exemplary power forecast for one day;
- Figure 9: illustrates exemplary efficiency curves of two stacks of a plant;
- Figure 10: illustrates an exemplary power schedule for the two stacks; and
- Figure 11: illustrates another exemplary power schedule for the two stacks.

### DETAILED DESCRIPTION

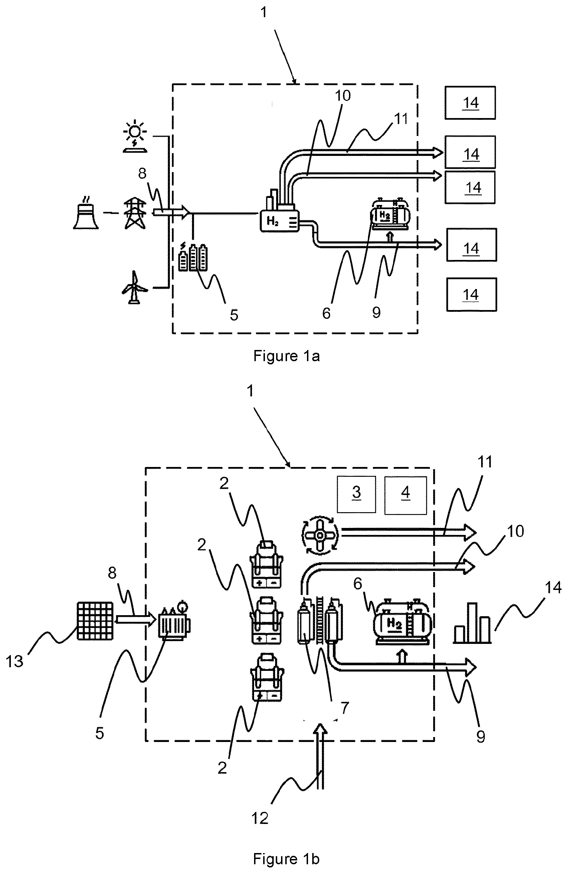

Figures 1a and 1b illustrates a system 1 according to the present disclosure, the system being an electrolyzer plant. The electrolyzer plant comprises a plurality of electrolyzer modules 2, a computing system 3, optional monitoring devices 4, optional electricity storage 5, optional hydrogen storage 6 and optional oxygen storage 7. Furthermore, arrow 8 indicates electricity input to the electrolyzer plant, arrow 9 indicates hydrogen output out of the electrolyzer plant, arrow 10 indicates oxygen output out of the electrolyzer plant, arrow 11 indicates heat output out of the plant, and arrow 12 indicates water input into the electrolyzer plant.

Merely for illustration and not part of the system of the present example, an electrical grid 13 and networks 14 into which the hydrogen, oxygen, and heat are fed, are shown.

It is noted that Figure 1a illustrates the plant with fewer details of the individual components of the plant than in Figure 1b merely for the sake of reflecting the level of detail or aspects that the first and second model of the present disclosure may model the electrolyzer plant, respectively.

The method of the present disclosure may be performed in a system as shown in Figures 1a and 1b, the method steps, for example, being carried out by the computing system 3, or any other suitable system, particular a system according to the present disclosure.

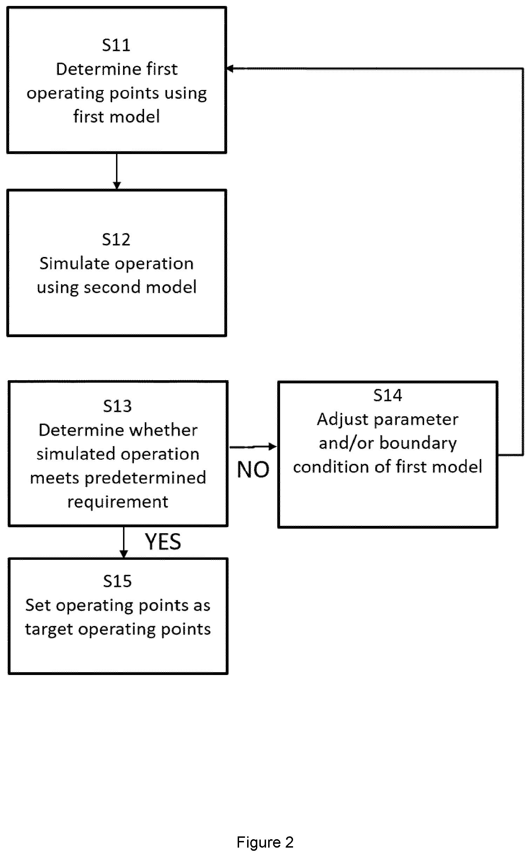

Figure 2 is a flowchart illustrating a method according to the present disclosure.

The method comprises step S11 of determining, by means of a first model, first operating points of the electrolyzer plant for a predetermined first period of time, step S12 of simulating, by means of a second model, operation of the electrolyzer plant for the first operating points for a predetermined second period of time that is shorter than and comprised in the first period of time, the second model being a model having higher prediction accuracy for the operation of the electrolyzer plant than the first model, and step S13 of determining whether the simulated operation meets a predetermined requirement.

In response to determining that the simulated operation does not meet the predetermined requirement, in step S14, one or more parameters and/or one or more boundary conditions of the first model are adjusted.

The method may then revert to step S11 and repeat the method steps with the adjusted parameters and/or boundary conditions, for example, until it is determined that the simulated operation meets the predetermined requirement, in which case the method will proceed to step S15.

In response to determining that the simulated operation meets the predetermined requirement, in step S15, the first operating points are set as target operating points for the predetermined second period of time.

Setting the first operating points as target operating points will lead to the plant being controlled in such a manner that it will operate at the target operating points.

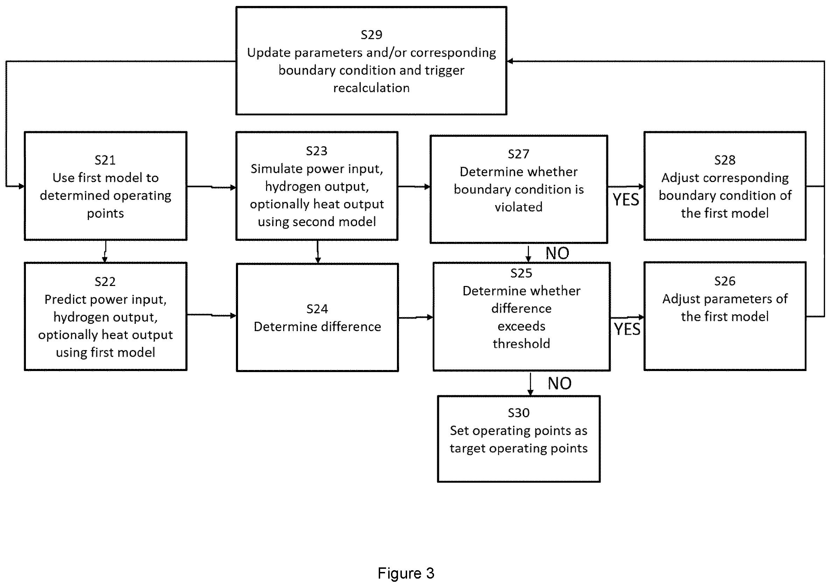

Figure 3 is a flowchart illustrating a method according to the present disclosure that may illustrate in more detail how the first and second model are used.

In step S21, the first model is used to determine operating setpoints for a first period of time. In step S22, the setpoints are used to predict, by means of the first model, a power input and a hydrogen output and optionally heat output for a second, shorter period of time. For example, the first model may be a linear model taking into account external technical aspects like electricity supply and/or hydrogen demand, and optionally external aspects concerning pricing and/or contractual aspects.

The setpoints are also used to simulate, in step S23, the plant operation using the second model for the second period of time, which also outputs at least a power input and a hydrogen output and optionally a heat output. In addition, the simulation may yield results for other, e.g., operation-related, parameters.

More specifically, the setpoints of step S22 are taken as input for the simulation in step S23. The simulation need not necessarily comprise any optimization in case the second model is fully determined by the results from the first model, for example by power consumption, hydrogen production, and heat production. Alternatively, the simulation may comprise an optimization. This may be the case when free parameters exist in the second model, for example reactive power, temperature profile, degradation, or the like.

In step S24, the difference between the results obtained by the first model and the second model, for example in terms of predicted or simulated power input and hydrogen output and optionally heat output, is determined. The comparison may be done using different distance metrics, for example: individual values at given times, averaged values over a predetermined time interval or averaged difference values.

In subsequent step S25, it is determined whether the difference exceeds a predetermined threshold. In step S26, in response to determining that this is the case, parameters of the first model for the second period of time are adjusted. The parameters may be adjusted in such a manner that a recalculation with the adjusted parameters is expected to reduce the difference between the results obtained by the first model and the second model in terms of predicted or simulated power input and hydrogen output and optionally heat output for the second time period. In other words, improved parameters for the first model are calculated that will result in a more accurate prediction by the first model and, thus, reduced difference between the results of the first and second model. Step S26 is only performed in case the threshold is exceeded. That is, if the threshold is not exceeded, no adjustment is performed.

In step S27, it is determined whether the simulation of step S23 yielded parameters that violate predetermined boundaries. In response to determining that this is the case, in step S28, corresponding boundaries of the first model are adjusted. The corresponding boundaries are adjusted in such a manner that a recalculation with the adjusted corresponding boundaries is expected to yield setpoints that, when simulating with the second model, would not lead to a violation of the predetermined boundaries, in other words, that would ensure that the boundaries are not violated.

Subsequently to step S26 and/or S28, in step S29, parameters and/or boundary conditions of the first model are updated and a recalculation is triggered. The method returns to step S21. That is, the first model, with adjusted parameters and/or boundaries, is used to determine operating setpoints.

The steps may be repeated until it is found, in step S25, that the difference between the models does not exceed the predetermined threshold, i.e., no adjustment of parameters is required, and no violation of any boundaries in detected, which may be referred to as convergence. Checking whether both is the case may be done sequentially, e.g. in the order shown in the Figure or in reverse order, or in parallel. Alternatively or in addition, one or more abort criteria may be applied that break the loop, for example, in case no convergence is reached after a pre-determined maximum number of iterations, or in case the results appear to be oscillating.

The method may then proceed to step S30, i.e., setting the operating setpoints as the target operating setpoints for the second period of time.

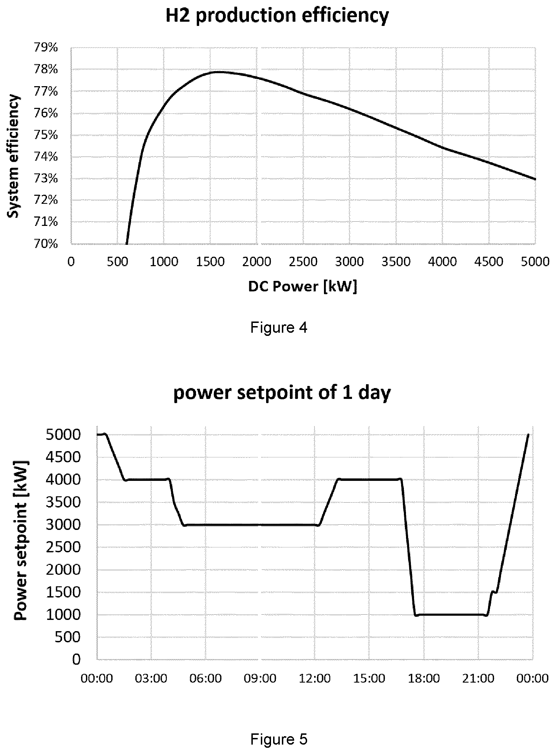

Further examples of methods according to the present disclosure will be outlined below making reference to Figures 4 to 11. It is noted that the first model is referred to as M1 and the second model is referred to as M2. The electrolyzer plant is also referred to as hydrogen production plant.

### Example 1

Example 1 focuses on the power set point and efficiency at the power set point. The power set point, in this example with a plant having only one module for the sake of illustration, is the overall power at which the plant is operated.

Reference will be made to Figure 4, which illustrates an exemplary simplified efficiency curve of a hydrogen production plant. This curve may be approximated in the first model M1 by one constant value, e.g., 74% in the present example.

In the present example, at the nominal operating point of 5 MW, 73% of the power can be converted to hydrogen, while the rest is losses, e.g., heat losses. Towards lower power setpoints, the efficiency rises to a peak around 78% and then falls steeply. The assumption of M1, i.e., hydrogen production at a constant efficiency of 74%, may already account for the fact, that the plant may not always operated at the nominal operating point value (5 MW with 73% efficiency), but sometimes below the nominal value with higher efficiencies. Further, for this example, it is assumed that M1 determines power setpoints for one day as shown in Figure 5, which illustrates an exemplary operation profile of the hydrogen production plant of one day. The day corresponds to the second time period. A first time period (not shown) may be a week, for example.

The hydrogen production as determined by M2 would be the power setpoint as shown in Figure 5 multiplied with the efficiency as shown in Figure 4.

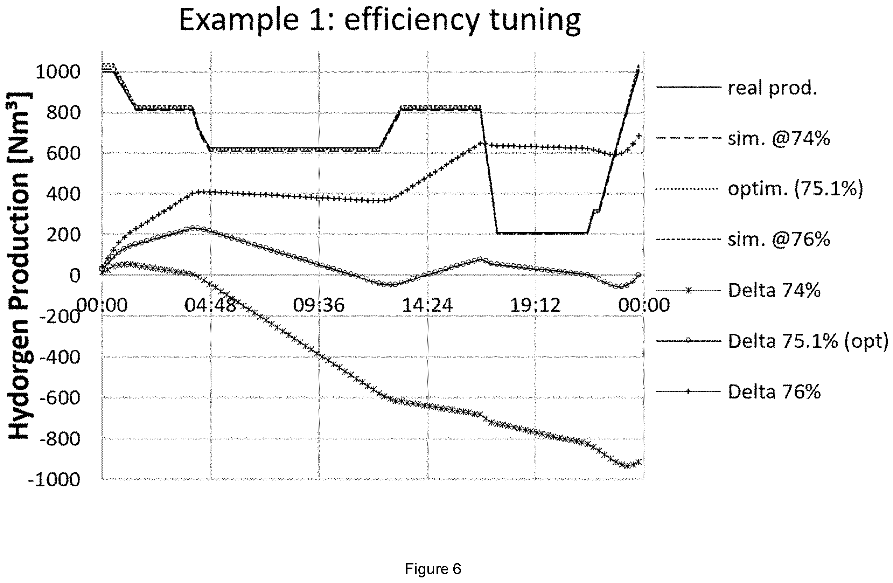

Figure 6 illustrates that assuming the efficiency of M1 (74%) leads to a large, unexpected overproduction ("Delta 74%"). An M1 efficiency parameter optimized using M2 by means of the method of the present disclosure leads to a production delta close to zero ("Delta 75.1% (opt)").

Figure 6 shows that the real production ("real prod.") and the simulated one with 74 % ("sim. @74%") seem to have a good match. However, when integrating the deviation over the day ("Delta 74%"), there is a deviation of 900 Nm³ of hydrogen, corresponding to 1 hour of additional production, as compared to the M1 prediction.

Overproduction is problematic on several levels, as non-existing storage capability may lead to loss of a full production hour in case the hydrogen cannot be fed into the network. In addition, the price at which an overhead of hydrogen can be sold may be low.

As can be seen from the Figures, with a fixed M1 setpoint of 76 % ("sim. @76%"), the M1 model predicts a hydrogen production that is 700 Nm³ higher than the real production ("Delta 76%"). This leads to an underproduction of hydrogen. As a consequence, this may also entail that contracts cannot be fulfilled, and penalties have to be paid.

By employing the more accurate second model M2 according to the present disclosure, this mismatch could be spotted for this particular day and an adjusted, e.g. an optimal, value for the constant M1 setpoint of 75.1 % can be calculated. A re-run of M1, based on the updated value for that day still might predict slightly wrong values for each hour, but over the day the total production would be accurate.

The optimal value (e.g., 75.1%) depends on the M1 profile of that day (e.g., as shown in Figure 5) and may thus not be accurate for other days. This means, the tuning by M2 may need to be repeated for other days.

However, a subset of profiles for different days can be grouped into "typical profiles", day-classes may be defined, and M2 can be used to determine an optimal value for each of the day-classes. For example, a value for a weekday and another one for a weekend-day. Similarly, values for summer and winter, or depending on weather forecast (calm or windy day) are conceivable.

Merely for the sake of completeness, as seen above, an example for keeping the model of a hydrogen production plant linear would be a constant hydrogen (and heat) production efficiency of the production plant, which is not the case in reality. Thus, the constant model clearly deviates from reality leading to the following problems or disadvantages.

As seen above, the predicted production rates are forecasted wrong, leading to more or less hydrogen produced than forecasted, depending on the setpoint. The estimated electrical power will also differ. This may be compensated via electricity bought/sold from/to the grid or via the electrical storage which SOC (state of charge) will then differ from the estimated SOC of M1. This may also entail higher costs. The real operation might enter operational areas which are not allowed due to technical reasons (safety, grid limit) or contractual reasons. For example, the electrical grid limit of the plant may be exceeded, the setpoints may lead to extreme degradation situations of the plant, and/or the setpoints would lead to plant operation in a non-safe area, e.g. due to high mixing of hydrogen in the oxygen exhaust leading to explosive gas. This may be due to the model M1 not including respective physical parameter(s) like electrolyzer temperature and pressure, reactive power or harmonics on the grid side, or degradation of the plant. Potential additional issues may be that not enough hydrogen can be produced, which may lead to contractual violations, or grid code compliance may be violated

### Example 2

Example 2 focuses on a production setpoint.

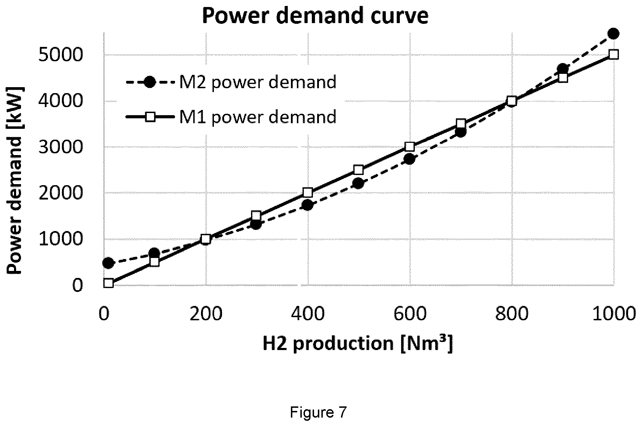

Figure 7 illustrates curves for electrical power demand [kW], for a desired hydrogen production [Nm³] for the simple linear M1 model and for the more accurate M2 model.

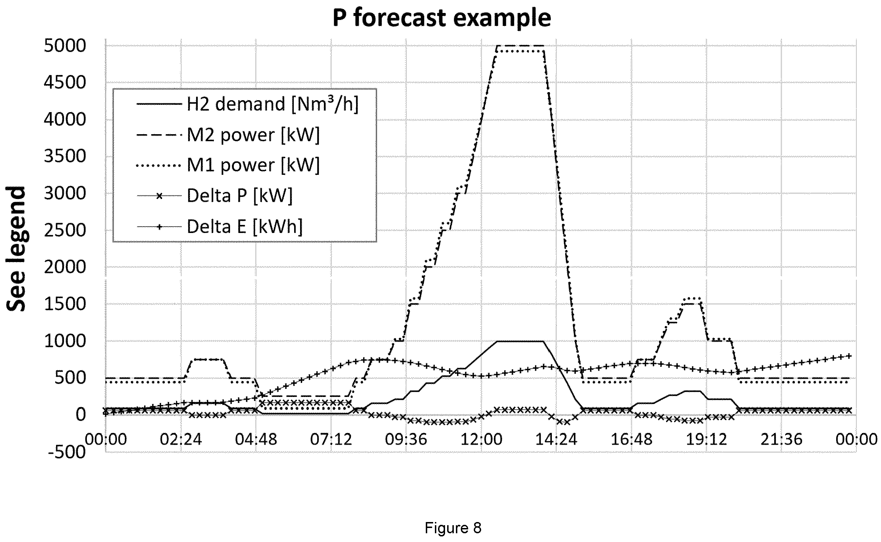

The M2 model calculates with the realistic non-linear values ("M2 power demand"). The simpler M1 model calculates with a linearized representation ("M1 power demand"). Based on this, the power demand for a given desired hydrogen production curve will look different, as shown in Figure 8.

More specifically, Figure 8 is a visualization of a one-day production of a hydrogen demand profile ("H2 demand"). The power difference ("Delta P") between the M1 schedule ("M1 power") and the M2 schedule ("M2 power") integrates to 900 kWh over one day ("Delta E"). The day corresponds to the second time period. A first time period (not shown) may be a week, for example.

Like in the first example, the integrated energy demand over the day shows a value of missing 850 kWh. However, in this example the discussion focuses on maximal power. M1 predicts 4877 kW, while M2 results in the more accurate higher value of 5000 kW.

In real operation, there is a risk that, alone or together with other consumers, the difference leads to exceeding the grid or transformer limit. According to the method of the present disclosure, e.g., by means of the above-described steps S27, S28, S29 and (repeated) step S21, the limit violation would be detected and corrected.

For example, a maximum hydrogen production value of 978 Nm³/h in the given timeframe would be calculated and the M1 model updated with this adjusted value, and a re-calculation for that specific day would be triggered, e.g., leading to a result that does not exceed the grid-limit.

A potentially technically dangerous situation of overloading of equipment can be avoided. In addition, optionally, contractually forbidden situations, like taking more power than allowed, can be avoided.

### Example 3

Example 3 examines the method of the present disclosure in the context of stack degradation. Degradation of electrolyzer stacks depends on many factors. Time of operation is the one that is usually provided in product sheets, e.g. as a value of efficiency loss over a certain time of operation, for example 0.1% efficiency loss for every 1000 h of operation. Other factors may include the number of cycles (comparable to batteries), operation temperature, shape of ramps, water quality, and others.

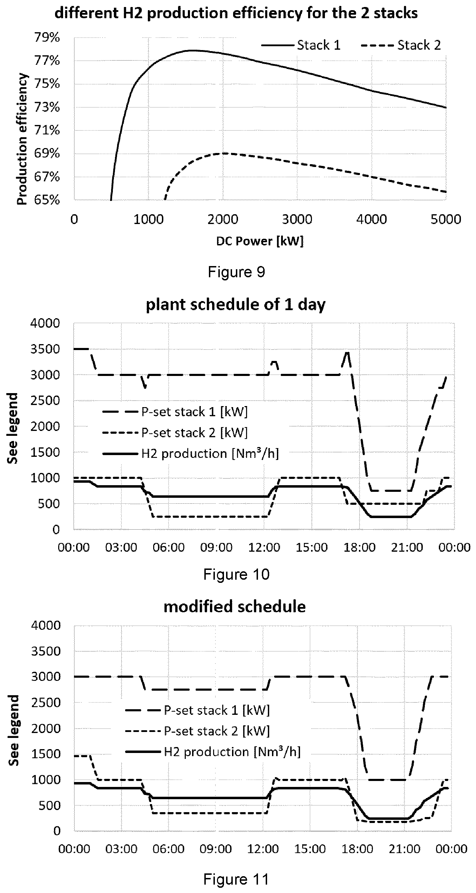

For this example, merely for sake of illustration, a plant with two stacks is considered, where stack 1 is a new or refurbished stack (it may have an efficiency as illustrated in Figure 4) and stack 2, that has not been replaced yet, is approaching end-of-life, and, accordingly, has a reduced efficiency. Figure 9 illustrates the different efficiency curves of the two stacks.

The determination of end-of-life may be based on several operation factors (among others operation hours and operation temperature) and may ensure that the stack is put out of operation before a safety risk occurs due to permeation of hydrogen on the oxygen side.

M1 might result in a production schedule and distribution between the two stacks as shown in Figure 10, which illustrates a 1-day schedule for the example plant consisting of two stacks, where one ("P-set stack 2") is close to end-of-life. The day corresponds to the second time period. A first time period (not shown) may be a week, for example.

In the present example, M1 includes a degradation model, based on the total amount of current through the stack. This leads to a current limit for stack 2 and a resulting P-max = 1000 kW.

However, M2 in this example, calculates that at around 15:00 the end-of-life of stack 2 is reached due to effects not modelled in M1. Switching stack 2 off at that point leads to missing 1000 Nm³ of hydrogen by the end of the day.

To still ensure sufficient hydrogen production while also ensuring the safety of the plant, in accordance with the method of the present disclosure, the M2 model would lead to adjusting a parameter and/or boundary condition, specifically, to reduce the M1-current limit for stack 2 on this day.

A renewed M1 calculation after adjustment would result in a modified distribution of the desired production between the two stacks, for example as shown in Figure 11. More specifically, Figure 11 shows 1-day schedule for the example plant consisting of two stacks. Stack 2, after adjustment and recalculation, is further reduced at times where it can be compensated by stack 1 so as to increase its lifetime.

Note that the overall hydrogen production schedule is the same as in Figure 11, but the distribution between the two stacks is using less of stack 2, which, therefore, can still operate until the end of the day before reaching end-of-life. The effect would be even more pronounced in case degradation is not modelled in M1 at all.

The above examples 1 to 3 bring about a number of advantages in addition to the advantages already outlined above. For example:
- The error in the first model M1 can be restricted to a predefined value (particularly example 1)
- Due to increased precision of the M1 results after adjustment, better decisions can be taken, leading potentially to higher revenues (particularly example 1)
- Violations of safety and/or contractual obligations can be avoided, again saving on potential costs (particularly examples 2, 3)
- All this is achieved without increasing the complexity of the M1 model. This ensures that the robustness and response times of M1 stays constant (particularly examples 1-3)
- Effects on parameters that vary over time (seasonal or degradation effects) can be accounted for (particularly examples 1-3)
- It is avoided that the plant operates at a potentially unsafe operating point (particularly example 2)
- Lifetime of the plant can be increased without sacrificing on financial performance (particularly example 3)
- Additional measurements are avoided (particularly examples 1-3)
- M1 can be tuned to stay on the safe side by conservative input by M2. An example is to reach a hydrogen production goal as closely as possible, but any deviations are related to higher production thus, for example, avoiding penalties.
- The method may tune M1 over time, while M1 is still robust for changes of outer conditions.
- The method provides the possibility to parallelize. The method may be performed at certain time intervals (e.g., once a day). Thus, the possibly necessary re-calculation of M1 only needs to be made for time intervals with identified problems. Technically the re-calculation can be parallelized with other calculations and avoid recalculating the complete time-horizon of M1.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. A computer-implemented method for controlling operation of an electrolyzer plant (1), comprising:
(a) determining, by means of a first model, first operating points of the electrolyzer plant (1) for a predetermined first period of time,
**characterized by** the steps of:
(b) simulating, by means of a second model, operation of the electrolyzer plant (1) for the first operating points for a predetermined second period of time that is shorter than and comprised in the first period of time, the second model being a model having higher prediction accuracy for the operation of the electrolyzer plant (1) than the first model,
(c) determining whether the simulated operation meets a predetermined requirement,
(d) upon determining that the simulated operation does not meet the predetermined requirement, adjusting one or more parameters and/or one or more boundary conditions of the first model, and
(e) upon determining that the simulated operation meets the predetermined requirement, setting the first operating points as target operating points for the predetermined second period of time,
wherein setting the first operating points as target operating points will lead to the plant being controlled in such a manner that it will operate at the target operating points.

2. The method of claim 1, wherein the determining by means of the first model is less computationally expensive than the simulating by means of the second model, in particular, wherein the first model is a linear model, and the second model is a non-linear model and/or may take into account a larger number of parameters than the first model.

3. The method of claims 1 or 2,
wherein the first model determines operating points on the basis of a first data set, wherein the first data set comprises one or more plant-external parameters, and
wherein the second model simulates operation of the electrolyzer plant on the basis of a second data set, wherein the second data set comprises one or more plant-specific parameters not comprised in the first data set.

4. The method of any of the preceding claims,
wherein determining whether the simulated operation meets the predetermined requirement comprises determining, for each of one or more boundary conditions, whether the simulated operation causes a violation of the boundary condition and, if it is determined that there is no violation of any of the boundary conditions, determining that the simulated operation meets the predetermined requirement,
in particular, wherein, in case it is determined that the simulated operation causes a violation of one or more of the boundary conditions, the adjusting comprises adjusting one more corresponding boundary conditions of the first model for at least the second period of time, and optionally issuing a warning.

5. The method of any of the preceding claims, further comprising:
determining a first operation of the electrolyzer plant, the operation being **characterized by** the first operating points determined, by means of the first model, for the predetermined second period of time and computing a difference between the first operation obtained by means of the first model and the simulated operation obtained by means of the second model,
in particular, wherein determining whether the simulated operation meets the predetermined requirement comprises determining whether the difference meets a predetermined similarity requirement, e.g., remains within predetermined limits and/or below a predetermined threshold.

6. The method of claim 5, wherein, in case it is determined that the difference does not meet the predetermined similarity requirement, the adjusting comprises adjusting one or more parameters of the first model.

7. The method of any of the preceding claims, comprising, in response to determining, in particular as part of determining whether the predetermined requirement is met, that the simulated operation causes a violation of the boundary condition,
temporarily overriding the first operating points for the second period of time with temporary operating points, for example obtained by means of the second model, such that operation for the temporary operating points does not cause a violation of the boundary condition, in particular, of any boundary condition,
in particular, wherein the temporarily overriding is performed at least until it is determined that the adjusting has resulted in a simulated operation that does not cause a violation of the boundary condition, in particular, that meets the predetermined requirement.

8. The method of any of the preceding claims, comprising repeating steps (a) to (d) at least until determining that the simulated operation meets the predetermined requirement.

9. The method of any of the preceding claims, comprising performing steps (a) to (d), and in particular performing any of the method steps of the preceding claims, for one or more additional periods of time as the second period of time, particularly, at predetermined times and/or predetermined time intervals for an upcoming period of time that is shorter than and comprised in the first period of time.

10. The method of any of the preceding claims, comprising:
storing adjustment data in a computer readable manner and/or performing, based on adjustment data, particularly by means of a machine learning method, improvements to the first model, in particular improvements taking into account context information,
wherein, in particular, the adjustment data comprise the one or more adjusted parameters and/or the one or more adjusted boundary conditions and/or adjusted operating points and/or adjustment steps performed to obtain the adjusted operating points, and optionally comprising associated context data reflecting operating conditions and/or environmental factors associated with the second period of time.

11. The method of any of the preceding claims, wherein simulating, by means of the second model, comprises performing independent simulations at electrolyzer module level in parallel for a plurality of electrolyzer modules (2) of the electrolyzer plant (1), and subsequently aggregating the results of the independent simulations taking into account interdependencies among the electrolyzer modules (2) and optionally interdependencies between the electrolyzer modules (2) and other pieces of equipment of the electrolyzer plant (1).

12. A system (1) comprising a processing system (3) configured to carry out the method of any one of claims 1 to 11.

13. The system according to claim 12, further comprising a plurality of electrolyzer modules (2) of an electrolyzer plant, the processing system configured to control operation of the electrolyzer modules to operate at the target operating points for the determined second period of time.

14. A computer-readable medium comprising instructions which, when executed by a computer, cause the computer to carry out the method of any one of claims 1 to 11.

15. A computer program product comprising instructions which, when the program is executed by a computer, cause the computer to carry out the method of any one of claims 1 to 11.

## Patentansprüche

1. Computerimplementiertes Verfahren zum Steuern des Betriebs einer Elektrolyseanlage (1), umfassend:
(a) Ermitteln erster Betriebspunkte der Elektrolyseanlage (1) für einen vorbestimmten ersten Zeitraum mittels eines ersten Modells,
**gekennzeichnet durch** die folgenden Schritte:
(b) Simulieren des Betriebs der Elektrolyseanlage (1) für die ersten Betriebspunkte mittels eines zweiten Modells für einen vorbestimmten zweiten Zeitraum, der kürzer ist als und in dem ersten Zeitraum enthalten ist, wobei das zweite Modell ein Modell ist, das eine höhere Vorhersagegenauigkeit für den Betrieb der Elektrolyseanlage (1) aufweist als das erste Modell,
(c) Feststellen, ob der simulierte Betrieb eine vorbestimmte Anforderung erfüllt,
(d) wenn festgestellt wird, dass der simulierte Betrieb die vorgegebene Anforderung nicht erfüllt, Anpassen eines oder mehrerer Parameter und/oder einer oder mehrerer Randbedingungen des ersten Modells, und
(e) wenn festgestellt wird, dass der simulierte Betrieb die vorgegebene Anforderung erfüllt, Festlegen der ersten Betriebspunkte als Zielbetriebspunkte für den vorgegebenen zweiten Zeitraum,
wobei das Festlegen der ersten Betriebspunkte als Zielbetriebspunkte dazu führt, dass die Anlage so gesteuert wird, dass sie an den Zielbetriebspunkten arbeitet.

2. Verfahren nach Anspruch 1, wobei das Ermitteln mittels des ersten Modells rechnerisch weniger aufwendig ist als das Simulieren mittels des zweiten Modells, insbesondere wobei das erste Modell ein lineares Modell ist und das zweite Modell ein nichtlineares Modell ist und/oder wobei das zweite Modell eine größere Anzahl von Parametern als das erste Modell berücksichtigen kann.

3. Verfahren nach Anspruch 1 oder 2,
wobei das erste Modell Betriebspunkte auf der Grundlage eines ersten Datensatzes ermittelt, wobei der erste Datensatz einen oder mehrere anlagenexterne Parameter umfasst, und
wobei das zweite Modell den Betrieb der Elektrolyseanlage auf der Grundlage eines zweiten Datensatzes simuliert, wobei der zweite Datensatz einen oder mehrere anlagenspezifische Parameter umfasst, die nicht im ersten Datensatz enthalten sind.

4. Verfahren nach einem der vorstehenden Ansprüche,
wobei das Feststellen, ob der simulierte Betrieb die vorgegebene Anforderung erfüllt, ein Bestimmen für jede einer oder mehrerer Randbedingungen, ob der simulierte Betrieb eine Verletzung der Randbedingung verursacht, und, falls festgestellt wird, dass keine der Randbedingungen verletzt wird, ein Bestimmen, dass der simulierte Betrieb die vorgegebene Anforderung erfüllt, umfasst,
insbesondere wobei, falls festgestellt wird, dass der simulierte Betrieb eine Verletzung einer oder mehrerer der Randbedingungen verursacht, das Anpassen ein Anpassen einer oder mehrerer entsprechender Randbedingungen des ersten Modells für mindestens den zweiten Zeitraum, und optional das Ausgeben einer Warnung umfasst.

5. Verfahren nach einem der vorstehenden Ansprüche, das ferner umfasst:
Bestimmen eines ersten Betriebs der Elektrolyseanlage, wobei der Betrieb durch die mittels des ersten Modells für den vorbestimmten zweiten Zeitraum bestimmten ersten Betriebspunkte gekennzeichnet ist, und Berechnen einer Differenz zwischen dem mittels des ersten Modells erhaltenen ersten Betrieb und dem mittels des zweiten Modells erhaltenen simulierten Betrieb,
insbesondere, wobei das Feststellen, ob der simulierte Betrieb die vorgegebene Anforderung erfüllt, ein Bestimmen umfasst, ob die Differenz eine vorgegebene Ähnlichkeitsanforderung erfüllt, z. B. innerhalb vorgegebener Grenzen und/oder unterhalb eines vorgegebenen Schwellenwerts bleibt.

6. Verfahren nach Anspruch 5, wobei, falls festgestellt wird, dass die Differenz die vorgegebene Ähnlichkeitsanforderung nicht erfüllt, das Anpassen ein Anpassen eines oder mehrerer Parameter des ersten Modells umfasst.

7. Verfahren nach einem der vorstehenden Ansprüche, umfassend, als Reaktion auf das Feststellen, insbesondere als Teil des Feststellens, ob die vorgegebene Anforderung erfüllt ist, dass der simulierte Betrieb eine Verletzung der Randbedingung verursacht,
vorübergehendes Überschreiben die ersten Betriebspunkte für den zweiten Zeitraum durch temporäre Betriebspunkte, die beispielsweise mittels des zweiten Modells erhalten werden, derart, dass der Betrieb für die temporären Betriebspunkte keine Verletzung der, insbesondere keiner, Randbedingung, verursacht,
wobei das vorübergehende Überschreiben insbesondere zumindest so lange durchgeführt wird, bis festgestellt wird, dass das Anpassen zu einem simulierten Betrieb geführt hat, der keine Verletzung der Randbedingung verursacht, insbesondere der der vorbestimmten Anforderung entspricht.

8. Verfahren nach einem der vorstehenden Ansprüche, umfassend ein Wiederholen der Schritte (a) bis (d) zumindest bis festgestellt wird, dass der simulierte Betrieb die vorgegebene Anforderung erfüllt.

9. Verfahren nach einem der vorstehenden Ansprüche, umfassend das Durchführen der Schritte (a) bis (d) und insbesondere das Durchführen eines der Verfahrensschritte der vorstehenden Ansprüche für einen oder mehrere zusätzliche Zeiträume als zweiter Zeitraum, insbesondere zu vorbestimmten Zeitpunkten und/oder in vorbestimmten Zeitintervallen für einen bevorstehenden Zeitraum, der kürzer ist als und in dem ersten Zeitraum enthalten ist.

10. Verfahren nach einem der vorstehenden Ansprüche, umfassend:
Speichern von Anpassungsdaten in computerlesbarer Form und/oder Vornehmen von Verbesserungen am ersten Modell auf Grundlage der Anpassungsdaten, insbesondere mittels eines maschinellen Lernverfahrens, wobei insbesondere Verbesserungen unter Berücksichtigung von Kontextinformationen vorgenommen werden,
wobei die Anpassungsdaten insbesondere den einen oder die mehreren angepassten Parameter und/oder die eine oder die mehreren angepassten Randbedingungen und/oder angepassten Betriebspunkte und/oder die zum Erhalten der angepassten Betriebspunkte durchgeführten Anpassungsschritte umfassen und optional zugehörige Kontextdaten umfassen, die Betriebsbedingungen und/oder Umgebungsfaktoren widerspiegeln, die mit dem zweiten Zeitraum verbunden sind.

11. Verfahren nach einem der vorstehenden Ansprüche, wobei das Simulieren mittels des zweiten Modells ein paralleles Durchführen unabhängiger Simulationen auf Elektrolyseurmodul-Ebene für eine Vielzahl von Elektrolyseurmodulen (2) der Elektrolyseanlage (1) und ein anschließendes Aggregieren der Ergebnisse der unabhängigen Simulationen unter Berücksichtigung von Wechselwirkungen zwischen den Elektrolyseurmodulen (2) umfasst, und optional von Wechselwirkungen zwischen den Elektrolyseurmodulen (2) und anderen Ausrüstungsteilen der Elektrolyseanlage (1) aggregiert umfasst.

12. System (1), das ein Verarbeitungssystem (3) umfasst, das so konfiguriert ist, dass es das Verfahren nach einem der Ansprüche 1 bis 11 durchführt.

13. System nach Anspruch 12, das ferner eine Vielzahl von Elektrolyseurmodulen (2) einer Elektrolyseanlage umfasst, wobei das Verarbeitungssystem so konfiguriert ist, dass es den Betrieb der Elektrolyseurmodule so steuert, dass diese für den festgelegten zweiten Zeitraum an den Zielbetriebspunkten arbeiten.

14. Computerlesbares Medium, das Anweisungen umfasst, die, wenn sie von einem Computer ausgeführt werden, den Computer veranlassen, das Verfahren nach einem der Ansprüche 1 bis 11 durchzuführen.

15. Computerprogrammprodukt, das Befehle umfasst, die, wenn das Programm von einem Computer ausgeführt wird, den Computer veranlassen, das Verfahren nach einem der Ansprüche 1 bis 11 durchzuführen.

## Revendications

1. Procédé, mis en œuvre par ordinateur, de commande du fonctionnement d'une installation d'électrolyse (1), comprenant :
(a) la détermination, au moyen d'un premier modèle, de premiers points de fonctionnement de l'installation d'électrolyse (1) pour une première période de temps prédéterminée,
**caractérisé par** les étapes suivantes :
(b) la simulation, au moyen d'un deuxième modèle, du fonctionnement de l'installation d'électrolyse (1) pour les premiers points de fonctionnement pour une deuxième période de temps prédéterminée, plus courte que la première période de temps et comprise dans celle-ci, le deuxième modèle étant un modèle présentant une plus grande précision de prédiction du fonctionnement de l'installation d'électrolyse (1) que le premier modèle,
(c) la détermination si le fonctionnement simulé satisfait ou non à une exigence prédéterminée,
(d) en cas de détermination que le fonctionnement simulé ne satisfait pas à l'exigence prédéterminée, l'ajustement d'un ou de plusieurs paramètres et/ou d'une ou de plusieurs conditions aux limites du premier modèle, et
(e) en cas de détermination que le fonctionnement simulé satisfait à l'exigence prédéterminée, la fixation des premiers points de fonctionnement comme points de fonctionnement cibles pour la deuxième période de temps prédéterminée,
dans lequel la fixation des premiers points de fonctionnement comme points de fonctionnement cibles conduit à la commande de l'installation de telle manière qu'elle fonctionne aux points de fonctionnement cibles.

2. Procédé selon la revendication 1, dans lequel la détermination au moyen du premier modèle est moins coûteuse en calcul que la simulation au moyen du deuxième modèle, en particulier dans lequel le premier modèle est un modèle linéaire, et le deuxième modèle est un modèle non linéaire et/ou peut tenir compte d'un plus grand nombre de paramètres que le premier modèle.

3. Procédé selon les revendications 1 ou 2,
dans lequel le premier modèle détermine des points de fonctionnement sur la base d'un premier ensemble de données, le premier ensemble de données comprenant un ou plusieurs paramètres externes à l'installation, et
dans lequel le deuxième modèle simule le fonctionnement de l'installation d'électrolyse sur la base d'un deuxième ensemble de données, le deuxième ensemble de données comprenant un ou plusieurs paramètres propres à l'installation non compris dans le premier ensemble de données.

4. Procédé selon l'une quelconque des revendications précédentes,
dans lequel la détermination si le fonctionnement simulé satisfait ou non à l'exigence prédéterminée comprend la détermination, pour chacune d'une ou de plusieurs conditions aux limites, si le fonctionnement simulé entraîne ou non une violation de la condition aux limites et, en cas de détermination qu'il n'existe aucune violation d'aucune des conditions aux limites, la détermination que le fonctionnement simulé satisfait à l'exigence prédéterminée,
en particulier dans lequel en cas de détermination que le fonctionnement simulé entraîne une violation d'une ou de plusieurs des conditions aux limites, l'ajustement comprend l'ajustement d'une ou de plusieurs conditions aux limites correspondantes du premier modèle pour au moins la deuxième période de temps, et éventuellement l'émission d'un avertissement.

5. Procédé selon l'une quelconque des revendications précédentes, comprenant en outre :
la détermination d'un premier fonctionnement de l'installation d'électrolyse, le fonctionnement étant **caractérisé par** les premiers points de fonctionnement déterminés, au moyen du premier modèle, pour la deuxième période de temps prédéterminée et le calcul d'une différence entre le premier fonctionnement obtenu au moyen du premier modèle et le fonctionnement simulé obtenu au moyen du deuxième modèle,
en particulier dans lequel la détermination si le fonctionnement simulé satisfait ou non à l'exigence prédéterminée comprend la détermination si la différence satisfait ou non à une exigence de similarité prédéterminée, par exemple, si elle reste ou non comprise dans des limites prédéterminées et/ou inférieure à un seuil prédéterminé.

6. Procédé selon la revendication 5, dans lequel, en cas de détermination que la différence ne satisfait pas à l'exigence de similarité prédéterminée, l'ajustement comprend l'ajustement d'un ou de plusieurs paramètres du premier modèle.

7. Procédé selon l'une quelconque des revendications précédentes, comprenant, en réponse à la détermination, en particulier dans le cadre de la détermination si l'exigence prédéterminée est satisfaite ou non, que le fonctionnement simulé entraîne une violation de la condition aux limites,
le remplacement temporaire des premiers points de fonctionnement pour la deuxième période de temps par des points de fonctionnement temporaires, par exemple obtenus au moyen du deuxième modèle, de telle sorte que le fonctionnement pour les points de fonctionnement temporaires n'entraîne pas de violation de la condition aux limites, en particulier de toute condition aux limites,
en particulier dans lequel le remplacement temporaire est réalisé au moins jusqu'à ce qu'il soit déterminé que l'ajustement a conduit à un fonctionnement simulée qui n'entraîne pas de violation de la condition aux limites, en particulier, qui satisfait à l'exigence prédéterminée.

8. Procédé selon l'une quelconque des revendications précédentes, comprenant la répétition des étapes (a) à (d) au moins jusqu'à détermination que le fonctionnement simulé satisfait à l'exigence prédéterminée.

9. Procédé selon l'une quelconque des revendications précédentes, comprenant la réalisation des étapes (a) à (d), et en particulier la réalisation de l'une quelconque des étapes du procédé selon les revendications précédentes, pour une ou plusieurs périodes de temps supplémentaires en tant que deuxième période de temps, en particulier à des instants prédéterminés et/ou à des intervalles de temps prédéterminés pour une période de temps à venir plus courte que la première période de temps et comprise dans celle-ci.

10. Procédé selon l'une quelconque des revendications précédentes, comprenant :
le stockage de données d'ajustement sous une forme lisible par ordinateur et/ou la réalisation, sur la base de données d'ajustement, en particulier au moyen d'un procédé d'apprentissage automatique, d'améliorations du premier modèle, en particulier d'améliorations tenant compte d'informations de contexte,
dans lequel en particulier les données d'ajustement comprennent le ou les paramètres ajustés et/ou la ou les conditions aux limites ajustées et/ou des points de fonctionnement ajustés et/ou des étapes d'ajustement réalisées pour obtenir les points de fonctionnement ajustés, et comprenant éventuellement des données de contexte associées reflétant des conditions de fonctionnement et/ou des facteurs environnementaux associés à la deuxième période de temps.

11. Procédé selon l'une quelconque des revendications précédentes, dans lequel la simulation, au moyen du deuxième modèle, comprend la réalisation de simulations indépendantes au niveau de modules d'électrolyse en parallèle pour une pluralité de modules d'électrolyse (2) de l'installation d'électrolyse (1), puis l'agrégation des résultats des simulations indépendantes compte tenu d'interdépendances entre les modules d'électrolyse (2) et éventuellement d'interdépendances entre les modules d'électrolyse (2) et d'autres éléments d'équipement de l'installation d'électrolyse (1).

12. Système (1) comprenant un système de traitement (3) configuré pour mettre en œuvre le procédé selon l'une quelconque des revendications 1 à 11.

13. Système selon la revendication 12, comprenant en outre une pluralité de modules d'électrolyse (2) d'une installation d'électrolyse, le système de traitement étant configuré pour commander le fonctionnement des modules d'électrolyse de manière à les faire fonctionner aux points de fonctionnement cibles pour la deuxième période de temps prédéterminée.

14. Support lisible par ordinateur comprenant des instructions qui, lorsqu'elles sont exécutées par un ordinateur, amènent l'ordinateur à mettre en œuvre le procédé selon l'une quelconque des revendications 1 à 11.

15. Produit programme d'ordinateur comprenant des instructions qui, lorsque le programme est exécuté par un ordinateur, amènent l'ordinateur à mettre en œuvre le procédé selon l'une quelconque des revendications 1 à 11.
